# FASCICULE DE BREVET EUROPEEN

(11) **EP 0 660 479 B1**
(45) Date de publication et mention de la délivrance du brevet: **23.07.1997**
(21) Numéro de dépôt: 94402902.4
(22) Date de dépôt: 16.12.1994
(51) Int. Cl.: H02G 5/06

(54) **Câble monophase à isolation gazeuse pour le transport d'électricité**
Gasisoliertes einphasiges Stromkabel
Gas insulated, single phase power cable

(30) Priorité: 21.12.1993 FR 9315356
(43) Date de publication de la demande: 28.06.1995
(73) Titulaire: GEC ALSTHOM T ET D SA, 75016 Paris (FR)
(72) Inventeur: Pham, Van Doan, F-69330 Meyzieu (FR); Tixier, René, F-69008 Lyon (FR)
(74) Mandataire: Fournier, Michel

(56) Documents cités:
- EP-A- 0 281 323
- EP-A- 0 423 665
- EP-A- 0 573 338
- DE-A- 2 429 158
- DE-B- 2 313 749
- DE-U- 7 036 895
- FR-A- 2 132 646
- FR-A- 2 244 240
- FR-A- 2 642 578
- US-A- 3 646 245

## Description

La présente invention concerne le transport de l'électricité par câble à isolation gazeuse à haute tension supérieure ou égale à 245 kV.

La plupart des câbles à isolation par l'hexafluorure de soufre (SF6) réalisés à ce jour sont des câbles monophasés (Voir en particulier le revue Electra, n°94, 1984). Une ligne triphasée est constituée ainsi de trois ou quatre câbles monophasés. Une telle ligne est décrite dans le document EP-A-0 423 665.

Le principal avantage est le suivant: en cas de défaut sur la ligne, celui-ci est nécessairement un défaut monophasé qui ne concerne qu'un seul conducteur et ne peut se propager aux autres phases. Il n'y a donc qu'un seul conducteur à réparer, ce qui est plus rapide, plus simple et moins onéreux que de réparer un câble triphasé. Dans le cas d'une ligne à quatre conducteurs, le quatrième conducteur étant mis en réserve, la remise en service du réseau est encore plus rapide, car il suffit d'aiguiller la phase en défaut sur le 4ème conducteur. La réparation de la phase accidentée pourra être réalisée en temps voulu, sans grande urgence.

Les désavantages des lignes comprenant plusieurs câbles monophasés sont les suivants:
- pertes ohmiques plus importantes,
- prix plus élevé,
- surface occupée au sol plus grande.

Un but de la présente invention est de réaliser un câble de transport monophasé de prix de revient et d'entretien le plus réduit possible.

Pour les lignes à longues distances, il est préférable d'utiliser, comme gaz d'isolation, l'azote, qui, sous une pression de 12 hectopascals, a le même pouvoir d'isolation que le SF6 sous une pression de 4 hectopascals.

Dans les lignes à haute tension, 420 kV par exemple, où le courant de court-circuit est souvent de 63 kA, il est préférable, pour éviter la perforation du câble, qu'il comprenne une enveloppe en acier. Une enveloppe en acier d'épaisseur égale à 10 mm est suffisante, alors que si l'enveloppe était en aluminium, il faudrait prévoir une épaisseur d'au moins 30 mm.

L'utilisation de l'acier comme enveloppe extérieure présente des avantages bien connus:
- il est aisé de réaliser une enveloppe de grande longueur en soudant des éléments de 8 à 12 mètres les uns aux autres, la technique de soudage étant aisée et bien maîtrisée, notamment dans la construction des oléoducs et gazoducs,
- la protection contre la corrosion est également parfaitement maîtrisée.

Pour éviter l'échauffement de l'acier dû aux courants de Foucault produits par les variations du champ magnétique, il est nécessaire de prévoir un écran magnétique en aluminium, sous forme d'un tube d'épaisseur voisine de 8 mm et disposé à l'intérieur de l'enveloppe en acier.

L'enveloppe intérieure d'aluminium est séparée de l'enveloppe extérieure d'acier par des bandes ou couches ou bagues en matériau plastique ou polymère chargé tel que le polytétrafluoroéthylène connu sous la marque "Téflon". De préférence, le téflon est chargé afin d'avoir une densité suffisante tout en gardant un bas coefficient de frottement.

L'enveloppe intérieure en aluminium est réalisée en soudant les unes aux autres, par l'intermédiaire de couronnes de liaison également en aluminium, des éléments tubulaires de longueur égale à celle des éléments en acier dont est constituée l'enveloppe extérieure.

Les conducteurs, en aluminium ou en cuivre, sont formés d'éléments soudés entre eux.

Ils sont maintenus axialement au moyen de cônes fermés en matériau isolant tel que la résine époxy. Ils peuvent ou non coulisser sur l'enveloppe d'aluminium.

Les cônes isolants fermés, espacés d'une distance comprise entre 8 et 12 mètres, permettent en cas de défaut d'empêcher la propagation de la poussière et des particules métalliques.

La réalisation d'une ligne monophasée se fait de manière économique en réalisant en usine des compartiments comprenant chacun un élément d'enveloppe en acier, un élément d'enveloppe en aluminium, un cône isolant et un conducteur.

On soude bout à bout un certain nombre de compartiments, par exemple de 10 à 15 compartiments, pour réaliser ainsi un tronçon de ligne de longueur comprise entre 80 et 180 mètres.

A l'extrémité d'un tronçon est réalisé un compartiment de diamètre plus grand comportant notamment un cône isolant étanche au gaz, des vannes pour le remplissage et la vidange du gaz, et des contacts électriques glissant pour permettre la dilatation des conducteurs sans déformation latérale.

Les tronçons sont groupés en secteurs de 1000 à 1500 mètres de longueur reliés par des compartiments de raccordement démontables.

L'invention a pour objet un câble électrique monophasé à isolation gazeuse tel que décrit dans les revendications.

L'invention est expliquée en détail maintenant et on se référera au dessin annexé dans lequel:
- la figure 1 est une vue en demi-coupe axiale d'un câble monophasé selon un premier mode de réalisation de l'invention,
- la figure 2 est une vue en demi-coupe axiale d'un câble monophasé selon une variante de réalisation,
- les figures 2A et 2B sont des vues agrandies de certaines parties de la figure 2,
- la figure 3 est une vue en coupe axiale d'un compartiment de raccordement de deux tronçons, selon un premier mode de réalisation,
- la figure 4 est une variante de réalisation du compartiment de raccordement de la figure 3,
- la figure 5 est une vue en coupe axiale d'un compartiment de raccordement de deux tronçons, selon un deuxième mode de réalisation,
- la figure 6 est une variante de réalisation du compartiment de la figure 5,
- la figure 7 est une vue en coupe axiale d'un compartiment démontable de raccordement de deux secteurs de câble,
- les figures 8A à 8C illustrent le remplacement d'un compartiment endommagé.

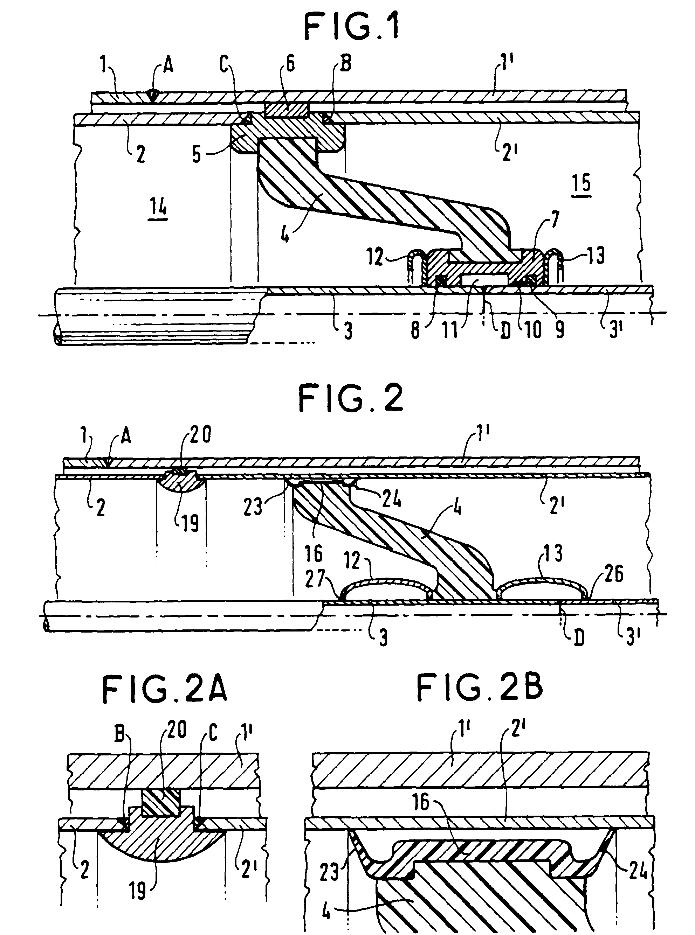

Dans la figure 1, les références 1 et 1' désignent les enveloppes d'acier de deux compartiments adjacents; les enveloppes d'acier sont soudées en A.

Les références 2 et 2' désignent les enveloppes intérieures en aluminium, soudées en B et C à un collier métallique 5 comprenant une gorge dans laquelle est engagée l'extrémité d'un cône isolant fermé 4. Une bande ou bague en téflon 6, logée dans une gorge du collier 5, assure l'espacement entre l'enveloppe d'acier et l'enveloppe d'aluminium et permet à l'enveloppe d'aluminium de glisser dans l'enveloppe d'acier lors de dilatations différentielles ou lors du montage.

Le cône isolant fermé 4 peut être monté sur le collier 5 ou inséré dans le collier 5; dans ce dernier cas, le collier sera réalisé en deux parties.

Les références 3 et 3' désignent deux éléments de conducteur, de préférence tubulaires, en aluminium ou en cuivre, soudés en D et engagés dans une ouverture axiale du cône isolant dans laquelle ils peuvent glisser.

L'ouverture axiale du cône est munie d'une chemise métallique 7 comprenant deux joints 8 et 9 anti-poussières encadrant un contact électrique 10. Entre les joints 8 et 9, la chemise présente un évidement 11.

Des anneaux anti-corona 12 et 13 complètent le dispositif.

Les poussières provenant du frottement de la chemise 7 et du contact électrique 10 sur le conducteur 3-3' sont emprisonnées dans l'espace 11 par les joints 8 et 9. On notera que la ligne D de soudure des éléments de conducteur 3 et 3' est disposée au droit de l'évidement 11.

Les espaces 14 et 15 de part et d'autre du cône isolant 4 sont remplis de gaz, à la même pression, car si le cône 4 est étanche aux poussières, il ne l'est pas au gaz.

La figure 2 montre une variante dans laquelle le cône isolant 4 n'est plus solidaire des enveloppes d'aluminium 2 et 2'. L'évidement 11 est supprimé. Le cône est rendu solidaire des conducteurs 3 et 3' par soudage en 26 et 27 des écrans anti-corona 12 et 13. La ligne de soudure D des éléments de conducteurs est placée à l'intérieur d'un des écrans anti-corona.

La base du cône 4 s'appuie sur l'enveloppe en aluminium par l'intermédiaire d'un joint 16 en "téflon", muni de deux jupes 23 et 24 assurant l'étanchéité aux poussières entre les compartiments de part et d'autre du cône.

Les éléments d'enveloppe en aluminium sont soudés en B et C à une bague métallique 19, qui porte dans une gorge une bague 20 en "téflon" assurant l'espacement entre l'enveloppe d'acier et l'enveloppe d'aluminium et facilitant le glissement des ces enveloppes l'une par rapport à l'autre lors des dilatations différentielles.

Le montage de la ligne est très simple et est effectué comme suit:
un collier 19 est soudé en B à un élément 2 d'enveloppe en aluminium et un élément 3 de conducteur est soudé en 27 à l'écran anti-corona 12; un élément 3' de conducteur est soudé en D à l'élément de conducteur 3; le cône isolant est alors mis en place, ainsi que l'écran anti-corona 13 qui est soudé en 26 sur l'élément de conducteur 3'; on glisse un élément d'enveloppe d'aluminium autour de l'élément de conducteur 3' et on le pousse jusqu'en C contre la bague 19; on soude l'élément 2' à la bague 19 en C; la bague 19 empêche l'injection de particules de soudure dans l'enceinte 14. On glisse un élément 1' d'enveloppe en acier autour de 2' puis le pousse jusqu'à venir en butée en A contre l'élément d'enveloppe en acier 1; on soude en A les éléments d'enveloppes 1 et 1'; l'opération est recommencée plusieurs fois (de 10 fois à 15 fois par exemple) jusqu'à obtention d'un tronçon de ligne de longueur désirée, par exemple 100 mètres. Tous les 100 mètres, il est nécessaire de prévoir un compartiment de raccordement entre tronçons permettant d'assurer la libre dilatation des divers éléments sans déformation autre qu'axiale.

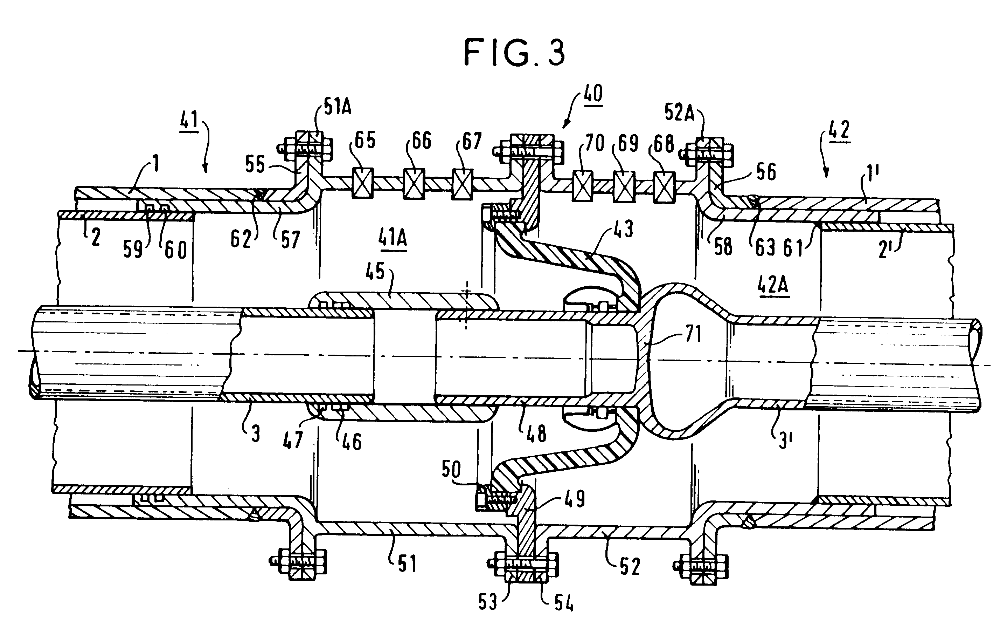

La figure 3 illustre un tel compartiment de raccordement 40 entre l'extrémité d'un tronçon de ligne et l'extrémité d'un tronçon adjacent.

On désigne par 1, 2 et 3 respectivement l'enveloppe en acier, l'enveloppe en aluminium et le conducteur du tronçon de gauche 41, et par 1', 2' et 3' les éléments homologues du tronçon de droite 42.

Le conducteur 3' est prolongé par un tube métallique 48 portant un manchon porte-contact 45; le conducteur 3 est en liaison électrique avec le tube 48 au moyen du manchon 45 qui est muni d'un contact électrique glissant 46 et d'un joint anti-poussières 47. Un espace est laissé entre l'extrémité du conducteur 3 et l'extrémité du tube 48 pour leur permettre une libre dilatation.

Le tube 48 est solidaire d'un cône 43, maintenu en place par une plaque 49 en alliage d'aluminium et une couronne 50. La plaque 49 est serrée entre les brides 53 et 54 de deux portions tubulaires en aluminium 51 et 52; l'extrémité 57 opposée à la bride 53 de la portion tubulaire 51 est engagée entre l'enveloppe d'acier 1 et l'enveloppe d'aluminium 2. En cas de dilatation, l'extrémité libre de cette dernière peut coulisser à l'intérieur de la portion 57 qui est munie d'un contact électrique glissant 59 et d'un joint anti-poussières 60. La portion tubulaire 51 est munie d'une bride 51A pour sa fixation par boulons à une bride 55 à l'extrémité de l'enveloppe d'acier 1.

L'extrémité 58 opposée à la bride 54 de la portion tubulaire 52 est engagée entre l'enveloppe en acier 1' et l'enveloppe en aluminium 2'; elle est soudée à cette dernière en 61. On note que l'enveloppe d'aluminium 2, 2' est fixée d'un côté et libre de l'autre côté du tronçon pour sa dilatation thermique. La portion tubulaire 52 est munie d'une bride 52A pour sa fixation à une bride 56 placée à l'extrémité de l'enveloppe en acier 1'.

On notera que le tube 48 est muni d'un fond 71, de sorte que les volumes 41A et 42A intérieurs aux tronçons 41 et 42 soient parfaitement étanches l'un par rapport à l'autre, cette étanchéité étant assurée en outre par des joints placés aux endroits adéquats.

Des vannes de remplissage de gaz 65, 68, des vannes de vidange 66, 69, des capteurs et des sorties éventuelles de fibres optiques 67, 70 par exemple pour la détection d'arc interne, sont montés sur les portions tubulaires 51 et 52.

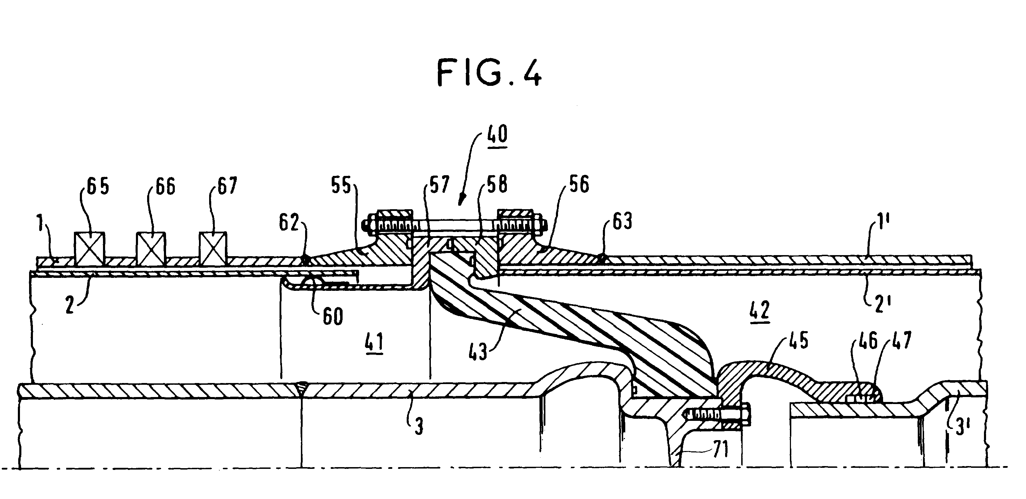

La figure 4 est une variante de réalisation du compartiment de la figure 3 et les éléments communs ont reçu les mêmes numéros de référence. La différence principale réside dans une plus grande simplification de la forme des pièces. La plaque 49 est supprimée, l'étanchéité entre les deux compartiments 41A et 42A étant assurée par le fond 71, situé cette fois sur le conducteur 3, et par le cône 43 dont la base est directement enserrée par les brides 57 et 58 munies de joints.

Les vannes 65, 66 et sorties de capteurs 67 sont reportées sur l'enveloppe d'acier 1.

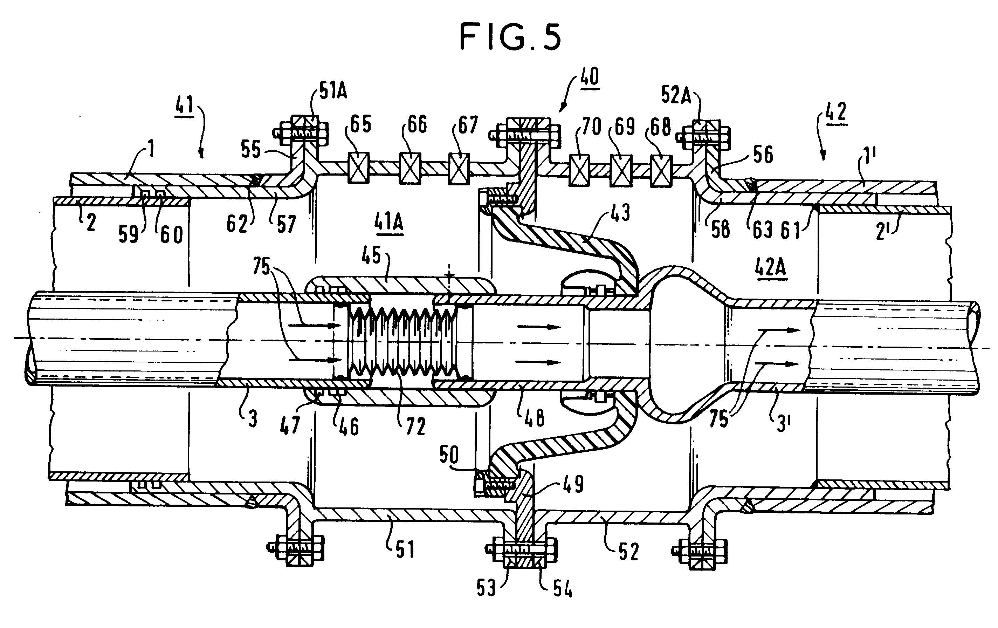

La figure 5 est une variante de réalisation du compartiment de la figure 3 et les éléments communs à ces deux figures ont reçu les mêmes numéros de référence.

Le fond 71 du tube 48 est supprimé; à l'intérieur du manchon porte-contact 45 est monté un soufflet métallique étanche 72 reliant l'élément conducteur 3 au tube 48.

Ceci permet d'assurer une communication entre tous les volumes intérieurs des éléments 3, 3', etc.. de conducteur tout le long de la ligne et d'établir une circulation 75 de fluide tout en maintenant l'étanchéité, à l'extérieur du conducteur, entre les divers tronçons de la ligne.

La circulation peut être une circulation d'azote qui permet de réduire l'échauffement du conducteur pendant la période de surcharge ou pendant l'été; la pression d'azote peut être la même à l'intérieur et à l'extérieur du conducteur (12 hectopascals par exemple). Le gaz échauffé peut être refroidi à l'extérieur du câble, par exemple par ventilation, et réinjecté dans le conducteur.

Dans le cas où le courant nominal est élevé, on peut faire circuler de l'eau déminéralisée.

En cas de régime normal sans surcharge, on peut maintenir statique la pression à l'intérieur et à l'extérieur du conducteur.

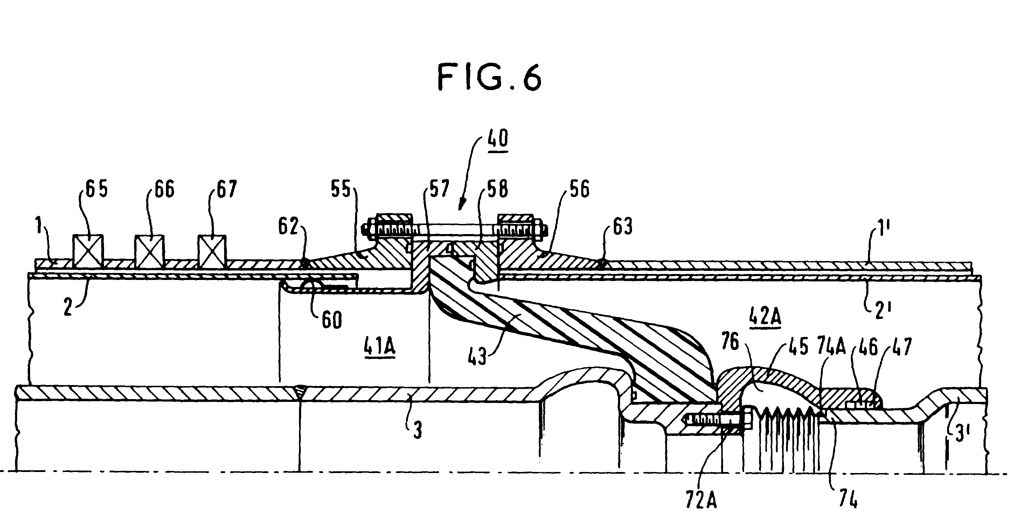

La figure 6 est une variante de réalisation du compartiment de la figure 4 et les éléments communs à ces figures ont reçu les mêmes numéros de référence.

Le fond 71 a été supprimé et on a disposé un soufflet 72 métallique ou en caoutchouc fixé sur le porte-contact 45 à l'extrémité du conducteur 3 par des vis 72A et à l'extrémité 74 du conducteur 3' par un collier 74A. Le montage s'effectue ainsi: on fixe le soufflet sur le porte-contact 45, on tire le soufflet en l'étendant au-delà du porte-contact 45 et on le fixe sur l'extrémité 74 du conducteur 3' à l'aide du collier 74A; on pousse alors le conducteur 3' vers la gauche pour positionner le soufflet dans l'espace 76 délimité par le porte-contact 45.

Le rôle du soufflet est le même que celui décrit en référence à la figure 4.

On notera que les raccordements de tronçons des figures 3 à 6 ne sont pas démontables. Dans la construction d'une ligne, on placera de tels raccordements non démontables tous les 100 mètres environ, pour assurer la libre dilatation des divers constituants sans déformation autre qu'axiale.

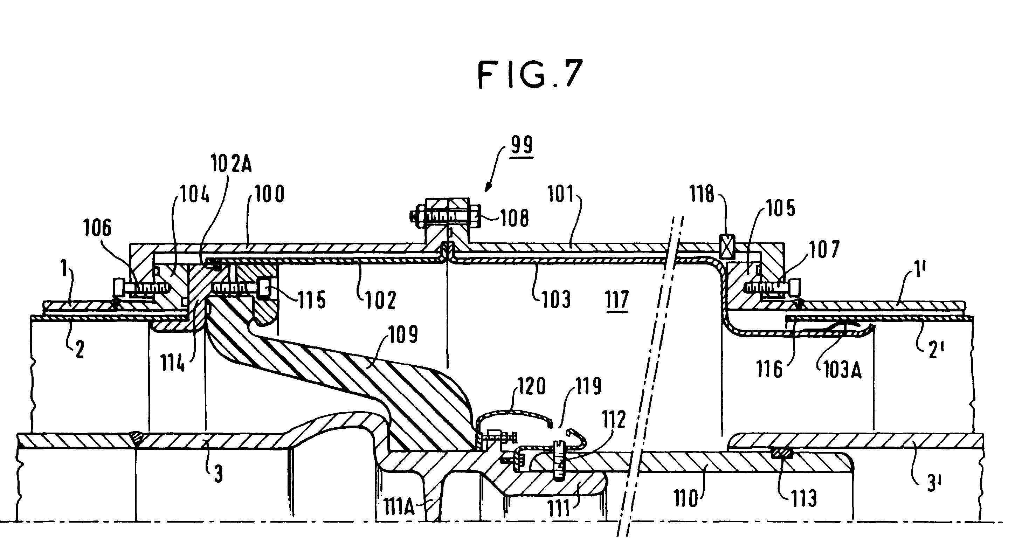

Tous les 500 mètres à 1500 mètres, il est nécessaire de prévoir un compartiment de raccordement démontable entre tronçons. On constitue ainsi des secteurs, constitués par exemple de 5 à 15 tronçons de 100 mètres, reliés par des compartiments de raccordement démontables. Un tel raccordement démontable est illustré par la figure 7.

Le raccordement, désigné globalement par la référence 99, comprend deux enveloppes en acier 100 et 101 et de deux enveloppes en aluminium 102 et 103.

Une première extrémité de l'enveloppe en acier 100 est solidarisée, par des boulons 106, à une bride 104 soudée à l'extrémité de l'enveloppe en acier 1 du secteur de gauche. Une première extrémité de l'enveloppe en aluminium 102 est fixée, par des vis 102A à une bride 114 en aluminium solidarisée à l'enveloppe d'aluminium 2 du secteur de gauche.

Une première extrémité de l'enveloppe en acier 101 est fixée par vis 107 à une bride 105 soudée à l'extrémité de l'enveloppe en acier 1' du secteur de droite. Une première extrémité de l'enveloppe d'aluminium 103 est munie d'un contact électrique 103A coopérant avec l'extrémité 116 de l'enveloppe 2' du secteur de droite.

Les secondes extrémités des enveloppes en acier 100 et 101 sont munies de brides enserrant les secondes extrémités recourbées des enveloppes en aluminium 102 et 103. Le serrage est assuré au moyen de vis 108.

Le cône 109 est fixé à la bride 114 au moyen de vis 115; à l'extrémité du conducteur 3 du secteur de gauche est fixée une pièce sensiblement tubulaire 111 munie d'un fond 111A. Une première extrémité d'un tube métallique 110 est fixée par vis 112 au tube 111; la seconde extrémité du tube 110 porte un contact métallique 113 coopérant avec le conducteur 3' du secteur de droite.

La référence 118 désigne une ou plusieurs vannes pour la vidange du gaz. Un capot anti-corona 120, muni de trous 119 d'accès aux vis 112, complète l'équipement du compartiment de raccordement 99.

En régime permanent, le courant passe par le conducteur 3, le tube 111, le tube 110, le contact 113 et le conducteur 3'. La continuité électrique entre l'enveloppe d'aluminium 2 et l'enveloppe d'aluminium 2' est assurée par la bride 114, l'enveloppe 102, l'enveloppe 103 et le contact 103A.

Le démontage s'effectue comme suit:
après avoir vidé le gaz par les vannes 118, on démonte les fixations 106, 107, 108 et 102A. On déplace les enveloppes 100 et 102 vers la gauche et l'enveloppe 101 vers la droite. L'espace ainsi dégagé permet de glisser l'enveloppe 103 vers la gauche. Par les trous 119 désormais accessibles, on enlève les vis 112 et on pousse le tube 110 à l'intérieur de 3'. Les deux secteurs sont ainsi séparés.

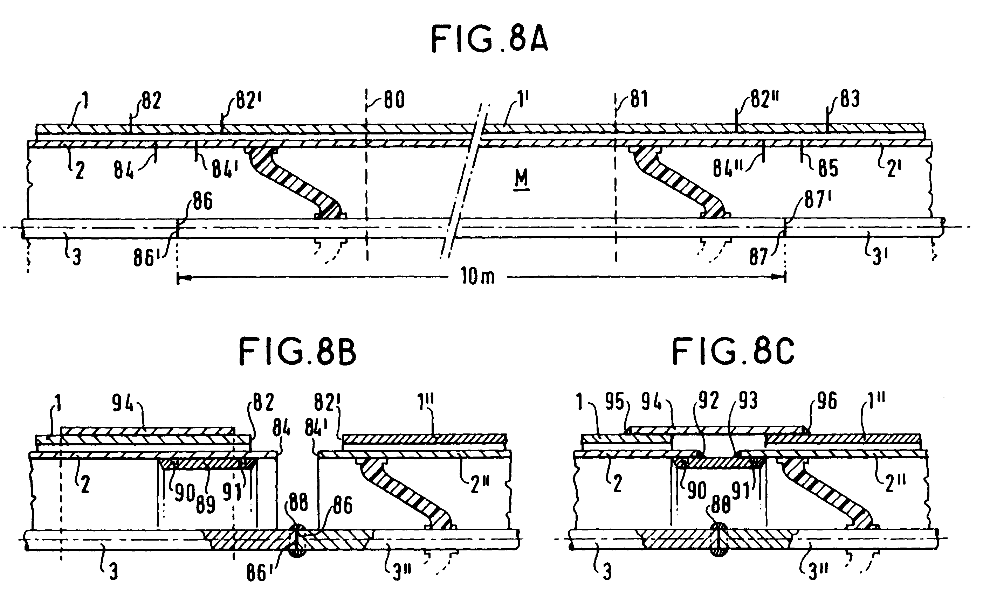

Les figures 8A à 8C montrent le démontage et le remplacement d'un compartiment endommagé par un arc interne par exemple.

Comme déjà signalé, seul l'espace entre deux cônes est supposé endommagé et pollué par les poussières et particules métalliques.

Des capteurs permettent de localiser avec précision le compartiment endommagé, par exemple par fibres optiques. On utilise l'espace disponible entre les enveloppes 1,1' et 2,2' pour y loger des fibres optiques utilisées comme capteurs ou comme support de transmission des informations le long du câble électrique, et des câbles électriques basse tension faible énergie pour l'alimentation de l'électronique.

La figure 8A montre le compartiment M à changer, soit environ 10 mètres en supposant que la longueur entre deux cônes soit de 8 mètres par exemple.

Le compartiment neuf et complet préparé en usine aura une longueur de 10 mètres pour le conducteur 3'', environ 9,5 mètres pour l'enveloppe 2'' en aluminium et 9 mètres pour l'enveloppe 1'' en acier. Il comporte à chaque extrémité un cône. Dans la figure 8A, les points délimitant le compartiment neuf dans sa position à venir sont marqués 82', 82", 84', 84", 86', 87.

La réparation s'effectue comme suit:
- on coupe le compartiment endommagé par exemple en 80 et 81. Ceci permet d'enlever d'abord 7 mètres environ du compartiment endommagé.

Puis on coupe en 82 et en 83 uniquement les enveloppes en acier 1 et 1'.

Ceci permet d'accéder à l'enveloppe en aluminium 2 (ou 2').

On coupe les portions d'enveloppe d'aluminium 2 et 2' en 84 et 85 respectivement. Ceci permet d'enlever les cônes endommagés et d'accéder au conducteur 3 (ou 3'). On coupe ensuite le conducteur 3 en 86 et le conducteur 3' en 87. Ceci permet d'enlever complètement le compartiment endommagé. La distance entre les points 86 et 87 est de 10 mètres, égale à celle du compartiment neuf à installer. On met en place le compartiment neuf (1", 2'', 3'', figure 8B). Les dégagements entre 82 et 82', 84 et 84' permettent de souder 86 à 86' (Figure 8B).

Pour éviter l'état de surface rugueux de la soudure, on peut utiliser un petit anneau 88.

Une pièce de liaison 89, posée antérieurement à l'intérieur de l'enveloppe d'aluminium avant la mise en place du compartiment neuf permet de lier électriquement 2 et 2'' par les soudures 92 et 93 (Figure 8C).

Des joints 90 et 91 permettent d'empêcher les particules métalliques d'entrer dans l'enceinte lors de la soudure en 92 et en 93.

Un tube de liaison en acier 94, posé antérieurement à l'extérieur du tube 1 permet de fermer de façon étanche le compartiment par les soudures en 95 et 96 (Figure 8C).

On effectue bien entendu les mêmes opérations de l'autre côté du compartiment.

## Revendications

1. Câble monophasé à isolation gazeuse pour le transport à longue distance du courant électrique sous haute tension, comprenant une enveloppe d'acier (1) cylindrique remplie d'azote sous une pression au moins égale à 10 hectopascals, un conducteur (3) métallique à base d'aluminium ou de cuivre maintenu axialement à l'intérieur de l'enveloppe d'acier, et une enveloppe (2) d'aluminium disposée à une faible distance de l'enveloppe en acier et formant pour l'enveloppe d'acier un écran magnétique vis-à-vis du champ magnétique créé par le courant traversant le conducteur, caractérisé en ce que ledit conducteur métallique est maintenu par des cônes isolants fermés, que ladite enveloppe d'acier est séparée de ladite enveloppe d'aluminium par des bagues en matière plastique ou polymère chargé, tel que le polytétrafluoro-éthylène, et que lesdites bagues (6, 20) sont placées chacune dans une gorge d'un collier métallique (5, 19), deux portions (2, 2') adjacentes de l'enveloppe d'aluminium étant soudées audit collier.

2. Câble selon la revendication 1, caractérisé en ce que ledit collier (5) est placé à la base d'un cône isolant fermé (4).

3. Câble selon l'une des revendications 1 et 2, caractérisé en ce que le conducteur est réalisé en tronçons soudés, les lignes de soudure (D) étant placées à l'intérieur d'un anneau anti-corona (13) monté à l'extérieur d'un cône isolant (4).

4. Câble selon l'une des revendications 1 à 3, caractérisé en ce qu'il est constitué de compartiments identiques de longueur comprise entre 8 et 12 mètres, fabriqués en usine et comprenant chacun une enveloppe en acier (1), un conducteur (3), un cône isolant (4) et une enveloppe (2) en aluminium, chaque portion de câble constituée par par un nombre donné compris entre 10 et 15 de compartiments étant reliée à la portion adjacente par un compartiment de raccordement (40,99) assurant la libre dilatation des conducteurs (3) et enveloppes (1, 2) sans déformation autre qu'axiale, et l'étanchéité au gaz et aux poussières entre les deux portions adjacentes.

5. Câble selon la revendication 4, caractérisé en ce que ledit compartiment de raccordement (40) comprend un contact glissant (45) fixé à l'extrémité du conducteur d'une portion et coopérant avec l'extrémité du conducteur de l'autre portion, et un contact (60) solidaire d'une extrémité de l'enveloppe d'aluminium d'une portion et coopérant avec l'extrémité de l'enveloppe d'aluminium de l'autre portion.

6. Câble selon l'une des revendications 4 et 5, caractérisé en ce qu'il comprend une plaque transversale (49) coopérant avec un cône isolant (43) pour assurer l'étanchéité relative des deux portions de câble.

7. Câble selon l'une des revendications 4 à 6, caractérisé en ce que les conducteurs des deux tronçons ou secteurs adjacents sont des conducteurs tubulaires (3, 3') dont les volumes intérieurs sont séparés par une fermeture (71, 111A).

8. Câble selon l'une des revendications 4 à 6, caractérisé en ce que les conducteurs des deux tronçons ou secteurs adjacents sont des conducteurs tubulaires (3, 3') reliés par un soufflet d'étanchéité (72) assurant un libre passage de fluide entre les deux conducteurs.

9. Câble selon la revendication 8, caractérisé en ce que le fluide est un fluide de refroidissement choisi parmi l'azote gazeux sous pression ou l'eau déminéralisée.

10. Câble selon l'une des revendications 4 à 9, caractérisé en ce qu'il comprend des secteurs comprenant un nombre donné compris entre 5 et 15 de tronçons séparés par des compartiments de raccordement démontables (99).

11. Câble selon la revendication 10, caractérisé en ce qu'un compartiment démontable comprend deux portions d'enveloppe d'acier (100, 101) fixées de manière amovible aux extrémités des enveloppes d'acier (1, 1') des secteurs adjacents, deux portions d'enveloppe d'aluminium dont l'une (102) est fixée de manière amovible à l'extrémité de l'enveloppe d'aluminium (2) de l'un des secteurs et dont l'autre (103) est munie d'un contact électrique (103A) coopérant avec l'extrémité de l'enveloppe d'aluminium (2') de l'autre secteur, lesdites portions d'enveloppe d'acier et d'aluminium étant solidarisées entre elles par vissage (108), le conducteur (3) de l'un des secteurs étant relié électriquement au conducteur (3') de l'autre secteur par un tube (110) fixé de manière amovible à l'un (3) desdits conducteurs et étant muni d'un contact électrique (113) coopérant avec le conducteur (3') de l'autre secteur.

12. Câble selon la revendication 1, caractérisé en ce que l'espace disponible entre l'enveloppe d'acier (1) et l'enveloppe d'aluminium (2) est utilisé pour y loger des fibres optiques et des câbles électriques de basse tension à faible puissance.

## Patentansprüche

1. Einphasiges Kabel mit gasförmiger Isolierung für den Transport elektrischen Stroms unter hoher Spannung über große Entfernungen, mit einer zylindrischen Stahlhülle (1), die mit Stickstoff unter einem Druck von mindestens 10 hPa gefüllt ist, mit einem metallischen Leiter (3) auf der Basis von Aluminium oder Kupfer, der im Inneren der Stahlhülle axial gehalten wird, und mit einer Aluminiumhülle (2), die in geringem Abstand von der Stahlhülle angeordnet ist und für diese eine magnetische Abschirmung gegenüber dem magnetischen Feld bildet, das von dem den Leiter durchfließenden Strom erzeugt wird, dadurch gekennzeichnet, daß der metallische Leiter durch geschlossene, konusförmige Isolierringe gehalten wird, daß die Stahlhülle von der Aluminiumhülle durch Ringe (6, 20) aus Kunststoff oder vergütetem Polymer wie z.B. Polytetrafluoräthylen getrennt ist, die je in einer Rinne eines Metallrings (5, 19) liegen, wobei zwei benachbarte Abschnitte (2, 2') der Aluminiumhülle an den Metallring angeschweißt sind.

2. Kabel nach Anspruch 1, dadurch gekennzeichnet, daß der Metallring (5) an der Basis eines geschlossenen, konusförmigen Isolierrings (4) liegt.

3. Kabel nach einem der Ansprüche 1 und 2, dadurch gekennzeichnet, daß der Leiter aus miteinander verschweißten Abschnitten besteht, wobei die Schweißnähte (D) innerhalb eines Antikoronarings (13) liegen, der außerhalb eines konusförmigen Isolierrings (4) montiert ist.

4. Kabel nach einem der Ansprüche 1 bis 3, dadurch gekennzeichnet, daß es aus gleichen Abteilen einer Länge zwischen acht und zwölf Metern gebildet wird, die werkseitig hergestellt sind und je eine Stahlhülle (1), einen Leiter (3), einen isolierenden konusförmigen Abstandsring (4) und eine Aluminiumhülle (2) besitzen, wobei jeder Kabelabschnitt mit einer bestimmten Anzahl von zwischen zehn und fünfzehn Abteilen an den benachbarten Abschnitt über ein Verbindungsabteil (40, 99) angeschlossen ist, das die freie Ausdehnung der Leiter (3) und Hüllen (1, 2) ohne eine andere als axiale Verformung und eine gas- und staubdichte Abdichtung zwischen den beiden benachbarten Abschnitten gewährleistet.

5. Kabel nach Anspruch 4, dadurch gekennzeichnet, daß das Verbindungsabteil (40) einen Gleitkontakt (45) aufweist, der am Ende des Leiters eines Abschnitts befestigt ist und mit dem Ende des Leiters des anderen Abschnitts zusammenwirkt, und daß ein Kontakt (60) vorgesehen ist, der mit einem Ende der Aluminiumhülle eines Abschnitts fest verbunden ist und mit dem Ende der Aluminiumhülle des anderen Abschnitts zusammenwirkt.

6. Kabel nach einem der Ansprüche 4 und 5, dadurch gekennzeichnet, daß es eine transversale Platte (49) aufweist, die mit einem konusförmigen Isolierring (43) zusammenwirkt, um die relative Dichtheit der beiden Kabelabschnitte zu gewährleisten.

7. Kabel nach einem der Ansprüche 4 bis 6, dadurch gekennzeichnet, daß die Leiter von zwei benachbarten Abschnitten oder Sektoren rohrförmige Leiter (3, 3') sind, deren Innenräume durch einen Boden (71, 111A) voneinander getrennt sind.

8. Kabel nach einem der Ansprüche 4 bis 6, dadurch gekennzeichnet, daß die Leiter von zwei benachbarten Abschnitten oder Sektoren rohrförmige Leiter (3') sind, die durch einen Abdichtungsbalg (72) verbunden sind, durch den ein Fluid zwischen den beiden Leitern frei strömen kann.

9. Kabel nach Anspruch 8, dadurch gekennzeichnet, daß das Fluid ein Kühlfluid ist, das unter gasförmigem Stickstoff unter Druck oder entmineralisiertem Wasser ausgewählt wird.

10. Kabel nach einem der Ansprüche 4 bis 9, dadurch gekennzeichnet, daß es Sektoren enthält, die eine bestimmte Anzahl von zwischen fünf und fünfzehn durch demontierbare Verbindungsabteile (99) getrennten Abschnitten enthält.

11. Kabel nach Anspruch 10, dadurch gekennzeichnet, daß ein demontierbares Abteil zwei Stahlhüllenabschnitte (100, 101), die lösbar an den Enden der Stahlhüllen (1, 1') der benachbarten Sektoren befestigt sind, zwei Aluminiumhüllenabschnitte, von denen einer (102) lösbar am Ende der Aluminiumhülle (2) eines der Sektoren befestigt ist und der andere (103) einen elektrischen Kontakt (103A) besitzt, der mit dem Ende der Aluminiumhülle (2') des anderen Sektors zusammenwirkt, daß die Abschnitte der Stahl- und der Aluminiumhülle aneinander durch Verschraubung (108) befestigt sind, daß der Leiter (3) eines der Sektoren elektrisch mit dem Leiter (3') des anderen Sektors über ein Rohr (110) verbunden ist, das lösbar an einem der Leiter (3) befestigt ist und einen elektrischen Kontakt (113) besitzt, der mit dem Leiter (3') des anderen Sektors zusammenwirkt.

12. Kabel nach Anspruch 1, dadurch gekennzeichnet, daß der zwischen der Stahlhülle (1) und der Aluminiumhülle (2) verfügbare Raum zum Verlegen von Lichtleitfasern und elektrischen Schwachstromkabeln verwendet wird.

## Claims

1. A gas-insulated single-phase cable for long-distance transport of electricity under high tension, the cable comprising a cylindrical steel case (1) filled with nitrogen under a pressure of at least 10 hectopascals, an aluminum- or copper-based metal conductor (3) held axially inside the steel case, and an aluminum case (2) disposed at a short distance from the steel case and constituting a magnetic screen protecting the steel case from the magnetic field generated by the current carried by the conductor, the cable being characterized in that said metal conductor is held by closed insulating cones, in that said steel case is separated from said aluminum case by rings of plastics material or of filled polymer, such as polytetrafluoroethylene, and in that each of said rings (6, 20) is placed in a groove in a metal collar (5, 19), with two adjacent portions of the aluminum case (2, 2') being welded to said collar.

2. A cable according to claim 1, characterized in that said collar (5) is placed at the base of a closed insulating cone (4).

3. A cable according to claim 1 or 2, characterized in that the conductor is made up of welded-together lengths, the weld lines (D) being placed inside anti-corona rings (13) that are mounted outside respective insulating cones (4).

4. A cable according to any one of claims 1 to 3, characterized in that it is made up of identical compartments of lengths lying in the range 8 meters to 12 meters, each compartment being made in a factory and each including a steel case (1), a conductor (3), an insulating cone (4), and an aluminum case (2), each portion of cable made up of a given number of compartments lying in the range 10 to 15 being connected to the adjacent portion of cable by a connection compartment (40, 99) that allows the conductors (3) and the cases (1, 2) to expand freely without any deformation other than axial deformation, and that provides gas-tight and dust-tight sealing between the two adjacent portions.

5. A cable according to claim 4, characterized in that said connection compartment (40) comprises a sliding contact (45) fixed to the end of the conductor in one of the portions and co-operating with the end of the conductor in the other portion, and a contact (60) that is secured to one end of the aluminum case of one of the portions and that co-operates with the end of the aluminum case of the other portion.

6. A cable according to claim 4 or 5, characterized in that it includes a transverse plate (49) co-operating with an insulating cone (43) to provide relative sealing for the two portions of cable.

7. A cable according to any one of claims 4 to 6, characterized in that the conductors of the two adjacent lengths or sectors are tubular conductors (3, 3') whose inside volumes are separated by closures (71, 111A).

8. A cable according to any one of claims 4 to 6, characterized in that the conductors of two adjacent lengths or sectors are tubular conductors (3, 3') that are interconnected via sealing bellows (72) allowing fluid to pass freely between two conductors.

9. A cable according to claim 8, characterized in that the fluid is a cooling fluid selected from gaseous nitrogen under pressure and distilled water.

10. A cable according to any one of claims 4 to 9, characterized in that it is made up of sectors each comprising a given number of lengths in the range 5 to 15, which lengths are separated from one another by connection compartments (99) that are suitable for being dismantled.

11. A cable according to claim 10, characterized in that a compartment suitable for being dismantled comprises two steel case portions (100, 101) that are fixed in removable manner to the ends of the steel cases (1, 1') of the adjacent sectors, two aluminum case portions, one of which (102) is fixed in removable manner to the end of the aluminum case (2) of one of the sectors and the other of which (103) is provided with an electrical contact (103A) co-operating with the end of the aluminum case (2') of the other sector, said steel and aluminum case portions being secured to one another by bolts (108), the conductor (3) of one of the sectors being electrically connected to the conductor (3') of the other sector by means of a tube (110) fixed in removable manner to one (3) of said conductors and being provided with an electrical contact (113) that co-operates with the conductor (3') of the other sector.

12. A cable according to claim 1, characterized in that the space available between the steel case (1) and the aluminum case (2) is used to receive optical fibers and low power, low voltage electrical cables.
